# EUROPÄISCHE PATENTANMELDUNG

(11) **EP 4 726 980 A1**
(43) Veröffentlichungstag der Anmeldung: **15.04.2026**
(21) Anmeldenummer: 24205360.1
(22) Anmeldetag: 08.10.2024
(51) Int. Cl.: H02M 1/00, H02M 3/00, H02M 3/335, H02M 1/34

(54) **ABLEITUNG VON ÜBERSPANNUNGEN IN EINEM RESONANZWANDLER**

(71) Anmelder: Siemens Aktiengesellschaft, 80333 München (DE)
(72) Erfinder: Portisch, Daniel, 2170 Poysdorf (AT)
(74) Vertreter: Siemens Patent Attorneys

(57) **Zusammenfassung**

Die Erfindung betrifft einen Resonanzwandler umfassend einen Transformator (T), welcher eine Primärwicklung (L6) und eine Sekundärwicklung (L1, L2) umfasst, wobei
- die Sekundärwicklung (L1, L2) in eine erste Teil-Sekundärwicklung (L1) und eine zweite Teil- Sekundärwicklung (L2) aufgeteilt ist;
- die Primärwicklung (L6), die erste Teil-Sekundärwicklung (L1) und die zweite Teil-Sekundärwicklung (L2) nebeneinander auf einem gemeinsamen Schenkel eines Magnetkerns des Transformators (T) angeordnet sind;
- die Primärwicklung (L6) zwischen der ersten Teil-Sekundärwicklung (L1) und der zweiten Teil-Sekundärwicklung (L2) angeordnet ist;
- die erste Teil-Sekundärwicklung (L1) und die zweite Teil-Sekundärwicklung (L2) jeweils von der Primärwicklung (L6) mit einem Abstand (a) beabstandet sind;
- die erste Teil-Sekundärwicklung (L1) und die zweite Teil-Sekundärwicklung (L2) in einer Mittelpunktschaltung verschaltet sind;
- die erste Teil-Sekundärwicklung (L1) in einem ersten Gleichrichterzweig in Serie mit einem ersten Gleichrichterelement (M1) und die zweite Teil-Sekundärwicklung (L2) in einem zweiten Gleichrichterzweig in Serie mit einem zweiten Gleichrichterelement (M2) geschaltet ist; und
- eine Ableiteinheit im Resonanzwandler angeordnet ist, über welche eine bei einer Umladung des ersten Gleichrichterelements (M1) und/oder des zweiten Gleichrichterelements (M2) in Streuinduktivitäten der Teil-Sekundärwicklungen (L1, L2) gespeicherte Energie ableitbar ist.

## Beschreibung

Die Erfindung betrifft einen Resonanzwandler umfassend einen Transformator.

Ein derartiger Resonanzwandler wird beispielsweise in Schaltnetzteilen eingesetzt und erzeugt üblicherweise eine Gleichspannung.

In Resonanzwandlern können Transformatoren vorgesehen sein. In derartigen Resonanzwandlern ist primärseitig ein LC-Schwingkreis vorgesehen, welcher mit einem Resonanzkondensator und einer Resonanzinduktivität realisiert ist. Dies ist nachteilig, da hierfür separate Bauteile zusätzlich zum Transformator erforderlich sind.

Ausgehend von den beschriebenen Nachteilen im Stand der Technik liegt der Erfindung die Aufgabe zugrunde, einen effizienten, günstigen und kompakten Resonanzwandler mit einer langen Lebensdauer und einer hohen Ausfallsicherheit anzugeben.

Diese Aufgabe wird gelöst durch einen Resonanzwandler umfassend einen Transformator, welcher eine Primärwicklung und eine Sekundärwicklung umfasst, wobei
- die Sekundärwicklung in eine erste Teil-Sekundärwicklung und eine zweite Teil-Sekundärwicklung aufgeteilt ist;
- die Primärwicklung, die erste Teil-Sekundärwicklung und die zweite Teil-Sekundärwicklung nebeneinander auf einem gemeinsamen Schenkel eines Magnetkerns des Transformators angeordnet sind;
- die Primärwicklung zwischen der ersten Teil-Sekundärwicklung und der zweiten Teil-Sekundärwicklung angeordnet ist;
- die erste Teil-Sekundärwicklung und die zweite Teil-Sekundärwicklung jeweils von der Primärwicklung mit einem Abstand beabstandet sind;
- die erste Teil-Sekundärwicklung und die zweite Teil-Sekundärwicklung in einer Mittelpunktschaltung verschaltet sind;
- die erste Teil-Sekundärwicklung in einem ersten Gleichrichterzweig in Serie mit einem ersten Gleichrichterelement und die zweite Teil-Sekundärwicklung in einem zweiten Gleichrichterzweig in Serie mit einem zweiten Gleichrichterelement geschaltet ist; und
- eine Ableiteinheit im Resonanzwandler angeordnet ist, über welche eine bei einer Umladung des ersten Gleichrichterelements und/oder des zweiten Gleichrichterelements in Streuinduktivitäten der Wicklungen gespeicherte Energie ableitbar ist.

Die Aufteilung der Sekundärwicklung in eine erste Teil-Sekundärwicklung und eine zweite Teil-Sekundärwicklung sowie die Beabstandung der beiden Teil-Sekundärwicklungen jeweils von der Primärwicklung erzeugt eine Streuinduktivität, welche im Resonanzwandler als Resonanzinduktivität wirkt und diese ersetzt. Damit kann ein separates Bauteil für die Resonanzinduktivität eingespart werden. Zusätzlich bewirkt der Abstand zwischen den Wicklungen, dass weniger Wirbelströme in den Wicklungen induziert werden, was eine geringere Erwärmung der Wicklungen bewirkt. Zusätzlich wird eine verbesserte Kühlung der Wicklungen ermöglicht, wenn der Abstand zwischen den Wicklungen nicht ausgefüllt ist.

Dadurch, dass die Primärwicklung zwischen der ersten Teil-Sekundärwicklung und der zweiten Teil-Sekundärwicklung angeordnet ist, wird der Abstand zwischen den beiden Teil-Sekundärwicklungen weiter erhöht. Damit liegt keine unbestromte Teil-Sekundärwicklung direkt im Streufeld einer bestromten Teil-Sekundärwicklung, womit keine zusätzlichen Wirbelstromverluste entstehen.

Zusätzlich wird die Verlustleistung der Sekundärwicklungen in einem größeren Bauraum verteilt, was eine verbesserte Kühlung der Wicklungen ermöglicht.

Durch die Verschaltung der beiden Teil-Sekundärwicklungen in einer Mittelpunktschaltung und die Verschaltung der ersten Teil-Sekundärwicklung in einem ersten Gleichrichterzweig in Serie mit einem ersten Gleichrichterelement und der zweiten Teil-Sekundärwicklung in einem zweiten Gleichrichterzweig in Serie mit einem zweiten Gleichrichterelement werden auf besonders vorteilhafte Weise Gleichrichterelemente eingespart. Dadurch entsteht im Resonanzwandler eine geringere Verlustleistung. Außerdem kann der Resonanzwandler damit günstiger und kompakter hergestellt werden.

Dadurch, dass eine Ableiteinheit im Resonanzwandler angeordnet ist, über welche eine bei einer Umladung des ersten Gleichrichterelements und/oder des zweiten Gleichrichterelements in Streuinduktivitäten der Teil-Sekundärwicklungen gespeicherte Energie ableitbar ist, wird eine lange Lebensdauer und eine hohe Ausfallsicherheit des Resonanzwandlers gewährleistet. Außerdem können Gleichrichterelemente eingesetzt werden, welche für niedrigere Sperrspannungen dimensioniert sind. Diese Gleichrichterelemente sind günstiger und weisen darüber hinaus eine geringere Verlustleistung auf. Mit anderen Worten ist über die Ableiteinheit eine in Streuinduktivitäten zwischen den Wicklungen gespeicherte Energie ableitbar. Mit anderen Worten ist über die Ableiteinheit elektrische Energie aus den Gleichrichterzweigen ableitbar. Mit anderen Worten ist über die Ableiteinheit eine bei einer Umladung der Gleichrichterelemente aufmagnetisierte Energie der Streuinduktivitäten ableitbar.

Vorteile und Ausgestaltungen der Erfindung, die einzeln oder in Kombination miteinander einsetzbar sind, sind Gegenstand der Unteransprüche.

Vorteilhaft ist es, wenn die Primärwicklung, die erste Teil-Sekundärwicklung und die zweite Teil-Sekundärwicklung als Scheibenwicklungen ausgeführt sind.

Die Ausführung der Wicklungen als Scheibenwicklungen bewirkt eine gleichmäßigere Streuung der Windungen der Teil-Sekundärwicklungen auf die jeweils korrespondieren Windungen der Primärwicklung. Damit ergibt sich eine harmonisch aufgeteilte Streuung und geringere Verluste. Mit anderen Worten wird dadurch die Erwärmung durch Wirbelströme in den beiden Teil-Sekundärwicklungen, die von den Streufeldern der jeweils anderen Teil-Sekundärwicklung hervorgerufen werden, massiv reduziert. Außerdem sind Scheibenwicklungen höher und es wird die zur Verfügung stehende Kühloberfläche weiter vergrößert.

Vorteilhaft ist es, wenn die Ableiteinheit eine Kopplungswicklung umfasst, über welche die erste und die zweite Teil-Wicklung magnetisch miteinander gekoppelt sind.

Die Kopplungswicklung sorgt dafür, dass Überspannungen in jeweils einer Teil-Sekundärwicklung in die jeweils andere Teil-Sekundärwicklung abgeleitet werden, ohne die Nachteile der räumlichen Nähe zueinander. Mit anderen Worten bewirkt die Kopplungswicklung, dass eine in Streuinduktivitäten zwischen den Wicklungen gespeicherte Energie ableitbar ist. Die zur Umladung der Gleichrichterelemente erforderliche Energie wird in den Streuinduktivitäten gespeichert und unmittelbar über die Kopplungswicklung in die jeweils andere Teil-Sekundärwicklung geleitet, welche gerade in ihrer Flussphase in einen Ausgang des Resonanzwandlers liefert.

Vorteilhaft ist es, wenn die Kopplungswicklung eine erste Teil-Kopplungswicklung und eine zweite Teil-Kopplungswicklung umfasst, wobei die erste und die zweite Teil-Kopplungswicklung parallelgeschaltet sind, und wobei die erste Teil-Kopplungswicklung mit der ersten Teil-Sekundärwicklung und die zweite Teil-Kopplungswicklung mit der zweiten Teil-Sekundärwicklung magnetisch gekoppelt ist.

Diese Ausgestaltung sorgt für eine ausgezeichnete magnetische Kopplung der beiden Teil-Sekundärwicklungen.

Vorteilhaft ist es, wenn die erste Teil-Kopplungswicklung um die erste Teil-Sekundärwicklung und die zweite Teil-Kopplungswicklung um die zweite Teil-Sekundärwicklung gewickelt ist.

Diese Ausgestaltung sorgt für eine ausgezeichnete magnetische Kopplung der beiden Teil-Sekundärwicklungen bei gleichzeitig einfacher Herstellbarkeit.

Vorteilhaft ist es, wenn die erste Teil-Kopplungswicklung bifilar mit der ersten Teil-Sekundärwicklung und die zweite Teil-Kopplungswicklung bifilar mit der zweiten Teil-Sekundärwicklung gewickelt ist.

Diese Ausgestaltung sorgt für eine noch weiter verbesserte magnetische Kopplung der beiden Teil-Sekundärwicklungen.

Vorteilhaft ist es, wenn die Ableiteinheit ein erstes Ableitelement, insbesondere eine erste Diode, und ein zweites Ableitelement, insbesondere eine zweite Diode, umfasst, und wobei das erste Ableitelement im ersten Gleichrichterzweig und das zweite Ableitelement im zweiten Gleichrichterzweig zur Ableitung von elektrischer Energie aus dem jeweiligen Gleichrichterzweig angeordnet ist.

Diese Ableitelemente können beispielsweise als Diode, Transistor, MOSFET oder Ähnliches ausgeführt sein und sorgen dafür, dass bei Umschwingvorgängen im Resonanzwandler die in den Streuinduktivitäten der beiden Teil-Sekundärwicklungen gespeicherte Energie nicht zu einer Beschädigung des Gleichrichters führt sondern abgeleitet werden kann. Mit anderen Worten sind Überspannungen über die Ableitelemente ableitbar.

Vorteilhaft ist es, wenn das erste und das zweite Ableitelement mit einem Speicherelement, insbesondere mit einem Kondensator, verschalten ist, welches durch die abgeleitete elektrische Energie aufladbar ist.

Dadurch wird die abgeleitete Energie nutzbringend im Resonanzwandler verwendet und der Wirkungsgrad des Resonanzwandlers erhöht.

Vorteilhaft ist es, wenn das Speicherelement über einen Tiefsetzsteller mit einem Ausgang des Resonanzwandlers verschalten ist.

Dadurch ist eine verbesserte Nutzung der abgeleiteten Energie möglich, was wiederum den Wirkungsgrad des Resonanzwandlers erhöht.

Vorteilhaft ist es, wenn die durch die Ableiteinheit ableitbare Energie über einen Tiefsetzsteller an den Ausgang ableitbar ist.

Dadurch ist eine verbesserte Nutzung der abgeleiteten Energie möglich, was wiederum den Wirkungsgrad des Resonanzwandlers erhöht.

Vorteilhaft ist es, wenn der Abstand zumindest 3 mm, bevorzugt zumindest 4 mm, besonders bevorzugt zumindest 5 mm, beträgt.

Durch die Abstände ist es möglich, dass ein Kühlmedium, zum Beispiel Luft, durchtritt und dabei den Transformator, insbesondere die beiden Teilsekundärwicklungen, kühlt, beispielsweise durch natürliche oder erzwungene Konvektion.

Vorteilhaft ist es, wenn der Transformator als Manteltransformator mit einem Mittelschenkel ausgeführt ist und der gemeinsame Schenkel der Mittelschenkel ist.

Dadurch wird eine kompakte Bauform des Transformators bei gleichzeitig optimaler Kühlmöglichkeit erreicht.

Im Folgenden wird die Erfindung anhand der in den Figuren dargestellten Ausführungsbeispiele näher beschrieben und erläutert.
Fig. 1 zeigt einen Schaltungsaufbau einer beispielhaften ersten Ausführungsvariante des Resonanzwandlers,
Fig. 2 zeigt einen Schaltungsaufbau einer beispielhaften zweiten Ausführungsvariante des Resonanzwandlers, und
Fig. 3 zeigt eine beispielhafte Ausführungsvariante des Transformators des Resonanzwandlers in einer Schnittdarstellung.

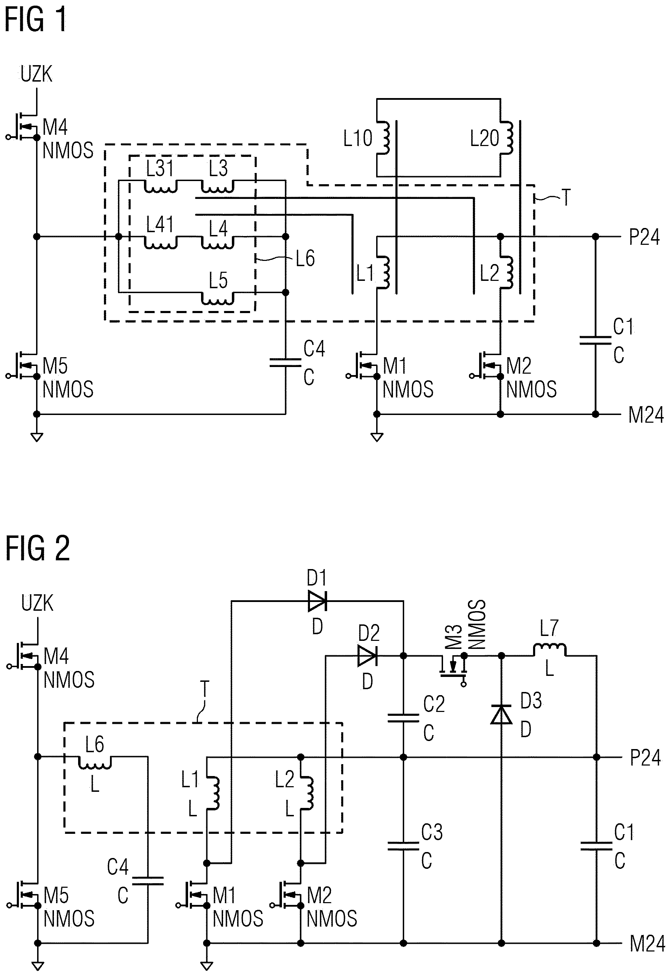

Fig. 1 und 2 zeigen einen Schaltungsaufbau jeweils einer beispielhaften ersten und zweiten Ausführungsvariante des Resonanzwandlers. Der Resonanzwandler wird mit einer Versorgungsspannung, in diesem Beispiel mit einer Zwischenkreisspannung UZK, versorgt. Durch das erste Schaltelemente M4 und das zweite Schaltelement M5, in diesem Beispiel ausgeführt als n-Kanal-Metall-Oxid-Halbleiter-Feldeffekttransistoren (Abkürzung: "NMOS"), wird eine primäre Halbbrücke des Resonanzwandlers gebildet. Gemeinsam mit der Streuinduktivität der Primärwicklung des Transformators T und dem Resonanzkondensator C4 wird damit ein LC-Serienschwingkreis gebildet. Durch das erste Gleichrichterelement M1 und das zweite Gleichrichterelement M2 wird ein ausgangsseitiger Gleichrichter gebildet, wobei der das erste Gleichrichterelement M1 mit der ersten Teil-Sekundärwicklung L1 des Transformators T in einem ersten Gleichrichterzweig und das zweite Gleichrichterelement M2 mit der zweiten Teil-Sekundärwicklung L2 des Transformators T in einem zweiten Gleichrichterzweig angeordnet ist. Die beiden Teil-Sekundärwicklungen L1 und L2 sind dabei in einer Mittelpunktschaltung miteinander verschalten. In diesem Beispiel ist das erste Gleichrichterelement M1 und das zweite Gleichrichterelement M2 als n-Kanal-Metall-Oxid-Halbleiter-Feldeffekttransistoren (Abkürzung: "NMOS") ausgeführt.

Beim Umschwingen der durch das erste Schaltelemente M4 und das zweite Schaltelement M5 gebildeten primären Halbbrücke wird über die Kopplung zwischen der Primärwicklung L4 und den beiden Teil-Sekundärwicklung L1 bzw. L2 die entladene Ausgangskapazität des ersten bzw. des zweiten Gleichrichterelements M1 bzw. M2 aufgeladen. Dabei magnetisiert sich die Streuinduktivität der beiden Teil-Sekundärwicklung L1 bzw. L2 auf und erhöht deren elektrisch Spannungen. Über die in beiden Ausführungsvarianten vorgesehene Ableiteinheit ist diese Spannung bzw. die in den Streuinduktivitäten gespeicherte Energie ableitbar. Die Ableiteinheit wird bei den detaillierten Beschreibungen der Ausführungsformen weiter beschrieben.

In Fig. 1 ist die Primärwicklung L6 des Transformators in einer Ersatzschaltung durch die Induktivitäten der ersten Hilfsinduktivität L4, der zweiten Hilfsinduktivität L3, der Hauptinduktivität L5, der ersten Streuinduktivität L41 und der zweiten Streuinduktivität L31 dargestellt. Die Darstellung der Primärwicklung L6 durch die verschiedenen Induktivitäten dient lediglich zur Veranschaulichung der Zusammenhänge der Streuinduktivitäten, der magnetischen Kopplungen und zur Simulation der Schaltung. Das Schaltbild in Fig. 1 kann auch nur mit der Primärwicklung L6, wie in Fig. 2 gezeigt, dargestellt werden.

Die Primärwicklung L6 ist in der Darstellung geteilt in eine erste Hilfsinduktivität L4 und eine zweite Hilfsinduktivität L3, da die Primärwicklung L6 sowohl zur ersten Teil-Sekundärwicklung L1 eine erste Streuinduktivität L41 hat als auch zur zweiten Teil-Sekundärwicklung L2 eine zweite Streuinduktivität L31 hat. Die erste Hilfsinduktivität L4 ist über ein definiertes Verhältnis (Wicklungsverhältnis) mit der ersten Teil-Sekundärwicklung L1 gekoppelt. Die zweite Hilfsinduktivität L3 ist über ein definiertes Verhältnis (Wicklungsverhältnis) mit der zweiten Teil-Sekundärwicklung L2 gekoppelt. Die erste Streuinduktivität L41 ist die Summe der Streuinduktivitäten der ersten Hilfsinduktivität L4 und der ersten Teil-Sekundärwicklung L1. Die zweite Streuinduktivität L31 ist die Summe der Streuinduktivitäten der zweiten Hilfsinduktivität L3 und der zweiten Teil-Sekundärwicklung L2. Die Hauptinduktivität L5 ist die resultierende Hauptinduktivität der Primärwicklung L6.

Wesentlich ist in Fig. 1 die Darstellung der Kopplungswicklung L10, L20, welche eine erste Teil-Kopplungswicklung L10 und eine zweite Teil-Kopplungswicklung L20 umfasst. In dieser Ausführungsvariante ist die Kopplungswicklung L10, L20 bzw. die erste Teil-Kopplungswicklung L10 und eine zweite Teil-Kopplungswicklung L20 von der Ableiteinheit umfasst. Die beiden Teil-Kopplungswicklungen L10, L20 sind elektrisch parallelgeschaltet. Die erste Teil-Kopplungswicklung L10 ist magnetisch mit der ersten Teil-Sekundärwicklung L1 gekoppelt. Die zweite Teil-Kopplungswicklung L20 ist magnetisch mit der zweiten Teil-Sekundärwicklung L2 gekoppelt. Die magnetischen Kopplungen sind in Fig. 1 durch Linien angedeutet, die von einer Wicklung zu einer mit dieser Wicklung gekoppelten Wicklung verlaufen. Die magnetische Kopplung einer der Teil-Kopplungswicklungen mit einer der Teil-Sekundärwicklungen kann auf unterschiedliche Arten hergestellt werden.

Eine Möglichkeit ist, dass die erste Teil-Kopplungswicklung L10 um die erste Teil-Sekundärwicklung L1 und die zweite Teil-Kopplungswicklung L20 um die zweite Teil-Sekundärwicklung L2 gewickelt ist.

Eine weitere Möglichkeit ist, dass die erste Teil-Kopplungswicklung L10 bifilar mit der ersten Teil-Sekundärwicklung L1 und die zweite Teil-Kopplungswicklung L20 bifilar mit der zweiten Teil-Sekundärwicklung L2 gewickelt ist.

Eine weitere Möglichkeit ist, dass die die erste Teil-Sekundärwicklung L1 um die erste Teil-Kopplungswicklung L10 und die zweite Teil-Sekundärwicklung L2 um die zweite Teil-Kopplungswicklung L20 gewickelt ist.

Die räumlich geteilten Sekundärwicklungen werden über die Kopplungswicklungen magnetisch gekoppelt und die in den Streuinduktivitäten gespeicherte Energie von der Umladung der Gleichrichterelemente wird unmittelbar über die Kopplung der Kopplungswicklungen in jene Teil-Sekundärwicklung geleitet, welche gerade in ihrer Flussphase in den Ausgang der Stromversorgung liefert.

In Fig. 2 ist eine beispielhafte zweite Ausführungsvariante des Resonanzwandlers gezeigt. In dieser Ausführungsvariante ist ein erstes Ableitelement D1 in Form einer Diode D1 und ein zweites Ableitelement D2 in Form einer Diode D2 von der Ableiteinheit umfasst. Um die in den Streuinduktivitäten der beiden Teil-Sekundärwicklungen L1 und L2 gespeicherte Energie, welche bei einer Umladung der Gleichrichterelemente M1 bzw. M2 gespeichert wurde, abzuleiten, ist im ersten Gleichrichterzweig die erste Diode D1 und im zweiten Gleichrichterzweig die zweite Diode D2 angeordnet. Die erste Diode D1 ist anodenseitig mit der ersten Teil-Sekundärwicklung L1 und dem ersten Gleichrichterelement M1 verbunden. Die zweite Diode D2 ist anodenseitig mit der zweiten Teil-Sekundärwicklung L2 und dem zweiten Gleichrichterelement M2 verbunden. Die beiden Dioden D1 und D2 sind kathodenseitig mit einem Kondensator C2 verbunden, welcher durch die durch die Dioden D1 und D2 aus den beiden Gleichrichterzweigen abgeleitete Energie aufladbar ist. Der Kondensator C2 ist mit einem - aus einem dritten Schaltelement M3, einer Induktivität L3 und einer Diode D3 gebildeten - Tiefsetzsteller verschalten. Die im Kondensator C2 gespeicherte Energie kann über den Tiefsetzsteller an den Ausgang P24 des Resonanzwandlers abgegeben werden. In diesem Beispiel ist das das dritte Schaltelement M3 als n-Kanal-Metall-Oxid-Halbleiter-Feldeffekttransistoren (Abkürzung: "NMOS") ausgeführt. Wesentlich ist, dass also über den Tiefsetzsteller nicht die gesamte Ausgangsleistung des Resonanzwandlers fließt. Über den Tiefsetzsteller wird lediglich die durch die Ableitelemente aus den Gleichrichterzweigen abgeleitete Energie, die bei der Umladung der Gleichrichterelemente M1 bzw. M2 gespeichert wurde, an den Ausgang abgegeben.

Das erste und zweite Gleichrichterelement M1 und M2 sowie die das erste, zweite und dritte Schaltelement M3, M4 und M5 werden über eine nicht dargestellte Steuerschaltung angesteuert.

Eine dritte, nicht dargestellte Ausführungsvariante, ist die Kombination der ersten und der zweiten Ausführungsvariante derart, dass vom Resonanzwandler eine Ableiteinheit umfasst ist, welche sowohl eine Kopplungswicklung als auch Ableitelemente umfasst. Diese dritte Ausführungsvariante vereint die Vorteile der ersten und zweiten Ausführungsvariante.

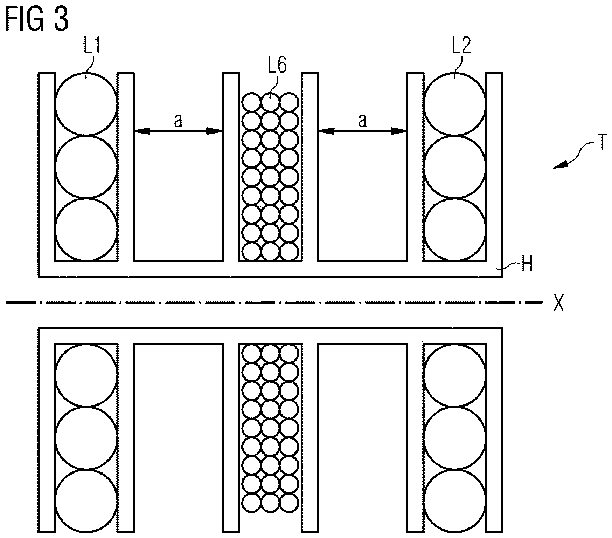

Fig. 3 zeigt eine beispielhafte Ausführungsvariante des Transformators T des Resonanzwandlers in einer Schnittdarstellung. Die Wicklungen verlaufen in diesem Ausführungsbeispiel rotationssymmetrisch um die Achse X. Die Wicklungen sind auf einer rotationssymmetrischen Halterung H angeordnet. Die Wicklungen samt Halterung H sind auf einem gemeinsamen Schenkel (nicht dargestellt) eines Eisenkreis des Transformators T angeordnet. Der Schenkel verläuft dabei in einer durch die Halterung H gebildeten Öffnung in Richtung der Achse X. Die beiden Teil-Sekundärwicklungen L1 und L2 sind in Richtung der Achse X gesehen jeweils neben der Primärwicklung L6 angeordnet, wobei zwischen den Wicklungen jeweils ein Abstand a vorhanden ist. Der Transformator T ist in diesem Beispiel als Manteltransformator mit einem Mittelschenkel ausgeführt. Der gemeinsame Schenkel, auf dem die Wicklungen angeordnet sind, ist in diesem Beispiel der Mittelschenkel. Die Kopplungswicklung ist in Fig. 3 nicht dargestellt. Die erste Teil-Kopplungswicklung L10 und die zweite Teil-Kopplungswicklung L20 kann in einer Ausführungsvariante der Erfindung beispielsweise bifilar jeweils mit der ersten Teil-Sekundärwicklung L1 bzw. mit der zweiten Teil-Sekundärwicklung L2 gewickelt werden.

### Bezugszeichenliste

- L1: Erste Teil-Sekundärwicklung
- L2: Zweite Teil-Sekundärwicklung
- L3: Zweite Hilfsinduktivität
- L31: Zweite Streuinduktivität
- L4: Erste Hilfsinduktivität
- L41: Erste Streuinduktivität
- L5: Hauptinduktivität
- L6: Primärwicklung
- L7: Drossel
- L10: Erste Teil-Kopplungswicklung
- L20: Zweite Teil-Kopplungswicklung
- T: Transformator
- a: Abstand
- H: Halterung
- X: Achse
- D1: Erste Diode
- D2: Zweite Diode
- C1: Ausgangskondensator
- C2: Erster Kondensator
- C3: Zweiter Kondensator
- C4: Resonanzkondensator
- M1: Erstes Gleichrichterelement
- M2: Zweites Gleichrichterelement
- M3: Erstes Schaltelement
- M4: Zweites Schaltelement
- M5: Drittes Schaltelement

## Patentansprüche

1. Resonanzwandler umfassend einen Transformator (T), welcher eine Primärwicklung (L6) und eine Sekundärwicklung (L1, L2) umfasst, wobei
- die Sekundärwicklung (L1, L2) in eine erste Teil-Sekundärwicklung (L1) und eine zweite Teil- Sekundärwicklung (L2) aufgeteilt ist;
- die Primärwicklung (L6), die erste Teil-Sekundärwicklung (L1) und die zweite Teil-Sekundärwicklung (L2) nebeneinander auf einem gemeinsamen Schenkel eines Magnetkerns des Transformators (T) angeordnet sind;
- die Primärwicklung (L6) zwischen der ersten Teil-Sekundärwicklung (L1) und der zweiten Teil-Sekundärwicklung (L2) angeordnet ist;
- die erste Teil-Sekundärwicklung (L1) und die zweite Teil-Sekundärwicklung (L2) jeweils von der Primärwicklung mit einem Abstand (a) beabstandet sind;
- die erste Teil-Sekundärwicklung (L1) und die zweite Teil-Sekundärwicklung (L2) in einer Mittelpunktschaltung verschaltet sind;
- die erste Teil-Sekundärwicklung (L1) in einem ersten Gleichrichterzweig in Serie mit einem ersten Gleichrichterelement (M1) und die zweite Teil-Sekundärwicklung (L2) in einem zweiten Gleichrichterzweig in Serie mit einem zweiten Gleichrichterelement (M2) geschaltet ist; und
- eine Ableiteinheit im Resonanzwandler angeordnet ist, über welche eine bei einer Umladung des ersten Gleichrichterelements (M1) und/oder des zweiten Gleichrichterelements (M2) in Streuinduktivitäten der Teil-Sekundärwicklungen (L1, L2) gespeicherte Energie ableitbar ist.

2. Resonanzwandler nach Anspruch 1, wobei die Primärwicklung (L6), die erste Teil-Sekundärwicklung (L1) und die zweite Teil-Sekundärwicklung (L2) als Scheibenwicklungen ausgeführt sind.

3. Resonanzwandler nach einem der Ansprüche 1 oder 2, wobei die Ableiteinheit eine Kopplungswicklung (L10, L20) umfasst, über welche die Teil-Sekundärwicklung (L1) erste und die zweite Teil-Sekundärwicklung (L2) magnetisch miteinander gekoppelt sind.

4. Resonanzwandler nach Anspruch 3, wobei die Kopplungswicklung (L10, L20) eine erste Teil-Kopplungswicklung (L10) und eine zweite Teil-Kopplungswicklung (L20) umfasst, wobei die erste Teil-Kopplungswicklung (L10) und die zweite Teil-Kopplungswicklung (L20) parallelgeschaltet sind, und wobei die erste Teil-Kopplungswicklung (L10) mit der ersten Teil-Sekundärwicklung (L1) und die zweite Teil-Kopplungswicklung (L20) mit der zweiten Teil-Sekundärwicklung (L2) magnetisch gekoppelt ist.

5. Resonanzwandler nach Anspruch 4, wobei die erste Teil-Kopplungswicklung (L10) um die erste Teil-Sekundärwicklung (L1) und die zweite Teil-Kopplungswicklung (L20) um die zweite Teil-Sekundärwicklung (L2) gewickelt ist.

6. Resonanzwandler nach Anspruch 4, wobei die erste Teil-Kopplungswicklung (L10) bifilar mit der ersten Teil-Sekundärwicklung (L1) und die zweite Teil-Kopplungswicklung (L20) bifilar mit der zweiten Teil-Sekundärwicklung (L2) gewickelt ist.

7. Resonanzwandler nach einem der vorangehenden Ansprüche, wobei die Ableiteinheit ein erstes Ableitelement (D1), insbesondere eine erste Diode (D1), und ein zweites Ableitelement (D2), insbesondere eine zweite Diode (D2), umfasst, und wobei das erste Ableitelement (D1) im ersten Gleichrichterzweig und das zweite Ableitelement (D2) im zweiten Gleichrichterzweig zur Ableitung von elektrischer Energie aus dem jeweiligen Gleichrichterzweig angeordnet ist.

8. Resonanzwandler nach Anspruch 7, wobei das erste (D1) und das zweite Ableitelement (D2) mit einem Speicherelement (C2), insbesondere mit einem ersten Kondensator (C2), verschalten ist, welches durch die abgeleitete elektrische Energie aufladbar ist.

9. Resonanzwandler nach Anspruch 8, wobei das Speicherelement (C2) über einen Tiefsetzsteller mit einem Ausgang des Resonanzwandlers verschalten ist.

10. Resonanzwandler nach einem der Ansprüche 7 bis 9, wobei die durch die Ableiteinheit ableitbare Energie über einen Tiefsetzsteller an den Ausgang ableitbar ist.

11. Resonanzwandler nach einem der vorangehenden Ansprüche, wobei der Abstand (a) zumindest 3 mm, bevorzugt zumindest 4 mm, besonders bevorzugt zumindest 5 mm, beträgt.

12. Resonanzwandler nach einem der vorangehenden Ansprüche, wobei der Transformator (T) als Manteltransformator mit einem Mittelschenkel ausgeführt ist und der gemeinsame Schenkel der Mittelschenkel ist.
